# EUROPÄISCHE PATENTSCHRIFT

(11) **EP 2 490 427 B1**
(45) Veröffentlichungstag und Bekanntmachung des Hinweises auf die Patenterteilung: **21.12.2016**
(21) Anmeldenummer: 11155066.1
(22) Anmeldetag: 18.02.2011
(51) Int. Cl.: H04M 3/56

(54) **Akustische Kopplungserkennung zwischen Kommunikationsendgeräten in einer Konferenzschaltung**
Acoustic coupling recognition between communication terminals in a conference call
Reconnaissance de couplage acoustique entre des terminaux de communication participant à une conférence téléphonique

(43) Veröffentlichungstag der Anmeldung: 22.08.2012
(73) Patentinhaber: Gigaset Communications GmbH, 40549 Düsseldorf (DE)
(72) Erfinder: Pflaum, Karl-Heinz, 46395, Bocholt (DE)
(74) Vertreter: Michalski Hüttermann & Partner Patentanwälte mbB

(56) Entgegenhaltungen:
- EP-A1- 1 868 362
- EP-A1- 1 973 321
- US-A1- 2007 050 451
- US-A1- 2008 160 976

## Beschreibung

Die Erfindung betrifft ein Verfahren, eine Vorrichtung und ein System zur akustischen Kopplungserkennung zwischen Kommunikationsendgeräten, zur mobilen Sprach- und/oder Datenkommunikation in einem funkbasierten Netzwerk.

Kommunikationsendgeräte zur mobilen Sprach- und/oder Datenkommunikation in einem funkbasierten Netzwerk sind heutzutage vielfältig einsetzbar, unter anderem kommen sie auch vermehrt bei Konferenzschaltungen mit verschiedenen Teilnehmern zum Einsatz.

Aktuelle Kommunikationsendgeräte zur mobilen Sprach- und/oder Datenkommunikation in einem funkbasierten Netzwerk ermöglichen Konferenzschaltungen von weit entfernten Teilnehmern. Befinden sich einige Konferenzteilnehmer beieinander im selben Raum, wird typischerweise ein Konferenzlautsprecher und ein gemeinsames Mikrofon benutzt. Diese sind dann typischerweise auch ortsgebunden.

Sollen die Konferenzteilnehmer ortsungebunden sein, so können sie mehrere Mikrofone bzw. Kommunikationsendgeräte verwenden; die Konferenzteilnehmer dürfen jedoch während der Konferenzschaltung nicht zu nah beieinander stehen, denn bei Telefonen, die über eine Konferenzschaltung verbunden sind, wird das Sendesignal des einen Teilnehmers über die Konferenzschaltung als Empfangssignal für die anderen Teilnehmer bereitgestellt. Kommt es, insbesondere bei der Verwendung schnurloser Telefone im Freisprechen dazu, dass sich zwei oder mehr der Teilnehmer in einem Raum befinden, so werden durch die nunmehr geschlossene Rückkopplungsschleife starke Pfeifgeräusche erzeugt. Diese bleiben solange bestehen, bis ein Teilnehmer die Verbindung beendet oder den Raum verlässt.

Wird ein Konferenzsystem mit nur einem Mikrofon bzw. Kommunikationsendgerät verwendet, müssen die Konferenzteilnehmer, die sich im selben Raum aufhalten, jedoch nah genug beieinander sein, damit das gemeinsame Mikrofon benutzt werden kann. Befindet sich einer dieser internen Konferenzteilnehmer zu weit vom gemeinsamen Mikrofon entfernt, ist er nur noch schlecht oder gar nicht mehr für den/die externen Konferenzteilnehmer zu verstehen.

Weiter sind diese internen Konferenzteilnehmer während der Konferenzschaltung ortsgebunden, d.h. einzelne interne Teilnehmer können den Raum nicht verlassen, ohne von der Konferenz abgeschnitten zu sein. Somit wird die Mobilität der einzelnen Konferenzteilnehmer stark eingeschränkt. Als interne Konferenzteilnehmer sind lokale Konferenzteilnehmer zu verstehen.

Dies führt oftmals dazu, dass Konferenzschaltungen - häufig auch mühselig - vorab terminiert werden müssen und sobald mehrere interne Teilnehmer in die Konferenz eingebunden sein sollen, für diese internen Teilnehmer ein gemeinsamer Konferenzraum notwendig wird.

Einen technischen Lösungsvorschlag offenbart die EP 1 868 362 A1, welche ein manuelles Verfahren zum Entkoppeln von Endgeräten umfasst, welche an eine Telefonkonferenz teilnehmen und sich am selben Ort befinden.

Aus der EP 1 973 321 A1 ist ein Telekonferenzsystem mit mehreren Kanälen an den jeweiligen Endpunkten bekannt. Bei diesem Telekonferenzsystem wird, wie auch beim beanspruchten Telekonferenzsystem, eine Entkopplung dadurch erreicht, dass ein erstes der an einer Konferenz beteiligten Kommunikationsendgeräte ein Entkopplungssignal an das Konferenzsystem übermittelt mit dem sich feststellen lässt, mit welchen weiteren, an der Konferenz beteiligten Endgeräten, das erste Endgerät akustisch rückgekoppelt ist.

Aufgabe der Erfindung ist es ein Verfahren, eine Vorrichtung und ein System zur Verfügung zu stellen, bei der zwei sich in räumlicher Nähe befindliche Kommunikationsgeräte während einer Konferenzschaltung nur dann entkoppeln, wenn sich eine Rückkopplung ergibt.

Diese Aufgabe wird gelöst durch den Gegenstand des Anspruchs 1, 5 und 7 .

Vorgestellt wird ein Verfahren zur akustischen Kopplungserkennung zwischen Kommunikationsendgeräten zur mobilen Sprach- und/oder Datenkommunikation in einem funkbasierten Netzwerk, umfassend zumindest die Verfahrensschritte: Koppeln zumindest eines ersten Kommunikationsendgerätes mit einem zweiten Kommunikationsendgerät in einer Konferenzschaltung, mittels einer Konferenzeinrichtung. Senden eines ersten akustischen Erkennungssignales durch das erste Kommunikationsendgerät. Senden eines zweiten akustischen Erkennungssignales durch das zweite Kommunikationsendgerät. Senden einer Entkopplungssignalisierung durch das erste Kommunikationsendgerät für den Fall, dass das erste Kommunikationsendgerät das zweite akustische Erkennungssignal des zweiten Kommunikationsendgerätes empfängt. Empfangen der Entkopplungssignalisierung durch die Konferenzeinrichtung. Ermitteln, welche Kommunikationsendgeräte voneinander entkoppelt werden sollen, basierend auf der durch die Konferenzeinrichtung empfangenen Entkopplungssignalisierung, und entkoppeln der ermittelten, zu entkoppelnden Kommunikationsendgeräte voneinander.

Durch die erfindungsgemäße Lehre wird der Vorteil erreicht, dass Konferenzteilnehmer sich während einer Konferenzschaltung im gleichen Raum aufhalten können, ohne auf ein gemeinsames Kommunikationsendgerät beschränkt zu sein. Dadurch wird auch die Ortsgebundenheit während einer Konferenzschaltung aufgehoben, wodurch sich die internen Konferenzteilnehmer ortsungebunden bewegen können und somit auch den gleichen Raum aufsuchen können, in dem sich ein weiterer Konferenzteilnehmer befindet, ohne dass es zu Rückkopplungsproblemen in der Konferenzschaltung kommt. Die Beseitigung des Rückkopplungsproblems kann dabei direkt an der Quelle selbst - der Konferenzschaltung - erfolgen und damit wird eine Verschlechterung der Sprachqualität vermieden.

Eine solche Konferenzeinrichtung kann ein ortsgebundes, wie auch mobiles System sein. Desweiteren kann solch eine Konferenzeinrichtung auch Bestandteil eines oder mehrerer der konferierenden Kommunikationsendgeräte sein.

Kommunikationsendgeräte können dabei jegliche, zur mobilen Sprach- und/oder Datenkommunikation in einem funkbasierten Netzwerk, geeigneten Vorrichtungen sein, beispielsweise ein Mobiltelefon.

Die Kommunikationsendgeräte senden während des Gesprächs im kombinierten Modus einen für das menschliche Gehör nicht wahrnehmbaren Ton aus, wobei in einem kombinierten Modus das Kommunikationsendgerät zeitgleich sowohl im Freisprechmodus als auch im Konferenzmodus betrieben wird. Erkennt ein Kommunikationsendgerät diesen ausgesandten Ton, wird an die Konferenzeinrichtung eine Signalisierung gesendet, die die Kopplung in der Telefonkonferenz zwischen den beiden lokalen Teilnehmern auftrennt, ohne die Kommunikationsendgeräte aus der Konferenzschaltung zu lösen. Alternativ kann die Erkennung des ausgesandten Tons auch durch die Konferenzeinrichtung selbst geschehen, sodass die genannte Signalisierung vom Kommunikationsendgerät an die Konferenzeinrichtung entfallen kann. Um zu verhindern, dass eines der Kommunikationsendgeräte auf das von ihm selbst erzeugte Erkennungssignal reagiert, können allgemein bekannte Verfahren zur Signalgenerierung und Signalisierung verwendet werden, wie beispielsweise Amplituden- und/oder Phasenmodulation, Frequenzmultiplex-Verfahren, Zeitmultiplex-Verfahren oder andere dem Fachmann bekannte Verfahren, mit denen Signale codiert und/oder generiert werden können.

Das gesendete Erkennungssignal eines erfindungsgemäßen Kommunikationsendgerätes, kann auch dann ausgesandt werden, wenn das Kommunikationsendgerät sich nicht im kombinierten Modus befindet.

Das gesendete Erkennungssignal ist ein akustisches Signal und liegt in einem Frequenz- oder Intensitätsbereich, der sich außerhalb des vom menschlichen Gehör wahrnehmbaren Frequenzspektrums oder Intensität befindet. Wünschenswert könnte es auch sein, das Erkennungssignal außerhalb desjenigen Frequenzspektrums anzuordnen, der für Haustiere, wie Hunde und Katzen wahrnehmbar ist. Hinsichtlich der Intensität kann das Signal derart ausgelegt sein, dass es unterhalb der Wahrnehmungsgrenze des menschlichen Gehörs liegt.

Bevorzugte Weiterbildungen der Erfindung sind in den Unteransprüchen beschrieben.

In einer besonders vorteilhaften Ausführungsform der Erfindung sind darüber hinaus zumindest die weiteren Verfahrensschritte vorgesehen: Senden einer Kopplungssignalisierung durch das erste Kommunikationsendgerät für den Fall, dass das erste Kommunikationsendgerät das zweite Erkennungssignal des zweiten Kommunikationsgerätes nicht mehr empfängt, Empfangen der Kopplungssignalisierung durch die Konferenzeinrichtung, und erneutes koppeln des ersten Kommunikationsendgerätes mit dem zweiten Kommunikationsendgerät. Alternativ kann die Erkennung des Erkennungssignals auch durch die Konferenzeinrichtung selbst durchgeführt werden, wodurch das Senden einer Kopplungssignalisierung durch das erste Kommunikationsendgerät entfallen kann.

Durch diese Ausführungsform wird erreicht, dass sich ein interner Konferenzteilnehmer, der sich im selben Raum wie ein weiterer interner Konferenzteilnehmer aufhält, den Raum während der Konferenzschaltung verlassen kann, ohne von der weiteren Konferenz ausgeschlossen zu werden, da sein Kommunikationsendgerät wieder mit den zuvor entkoppelten Kommunikationsendgeräten gekoppelt werden kann.

In einer weiteren besonders vorteilhaften Ausführungsform der Erfindung sind darüber hinaus zumindest die weiteren Verfahrensschritte vorgesehen: Koppeln zumindest eines dritten Kommunikationsendgerätes mit dem ersten Kommunikationsendgerät und dem zweiten Kommunikationsendgerät in der Konferenzschaltung mittels der Konferenzeinrichtung. Senden eines dritten Erkennungssignales durch das dritte Kommunikationsendgerät. Senden einer Entkopplungssignalisierung durch das erste Kommunikationsendgerät und/oder zweite Kommunikationsendgerät für den Fall, dass das erste Kommunikationsendgerät und/oder zweite Kommunikationsendgerät das dritte Erkennungssignal des dritten Kommunikationsendgerätes empfangen, und wobei das Entkoppeln der ermittelten zu entkoppelnden Kommunikationsendgeräte voneinander erfolgt, ohne dass die ermittelten zu entkoppelnden Kommunikationsendgeräte aus der Konferenzschaltung gelöst werden. Alternativ kann die Erkennung des Erkennungssignals durch die Konferenzeinrichtung selbst durchgeführt werden, wodurch das Senden einer Entkopplungssignalisierung durch das bzw. die Kommunikationsendgeräte entfallen kann.

Die Entkopplungssignalisierungen können dabei zumindest auch Informationen bezüglich der zu entkoppelnden Kommunikationsendgeräte enthalten. D.h., die Erkennungssignalisierungen der einzelnen Kommunikationsendgeräte könnten jeweils auch eine Endgerätekennung enthalten, so dass im Falle, dass ein erstes Kommunikationsendgerät die Erkennungssignalisierungen weiterer Kommunikationsendgeräte empfängt, dieses Kommunikationsendgerät aus den Erkennungssignalisierungen eindeutig auf die weiteren in räumlicher Nähe befindlichen Kommunikationsendgeräte schließen könnte. Somit könnte dieses Kommunikationsendgerät in seiner Entkopplungssignalisierung seine Kennung einbetten, ebenso wie die Kennungen der sich in seiner räumlichen Nähe befindlichen Kommunikationsendgeräte, damit die Konferenzeinrichtung sowohl das erste Kommunikationsendgerät als auch die in dessen räumlichen Nähe befindlichen Kommunikationsendgeräte voneinander entkoppeln kann, jedoch ohne diese aus der Konferenzschaltung zu lösen.

Entkoppeln bedeutet dabei, dass ein entsprechendes Kommunikationsendgerät in der Konferenzschaltung zwar noch seine Signale an die Konferenzeinrichtung weiter senden kann, jedoch diese Signale vorzugsweise nur an diejenigen Konferenzteilnehmer übertragen werden, von denen das entsprechende Kommunikationsendgerät nicht entkoppelt ist, und an die anderen Teilnehmer nicht oder nur in ggf. erheblich abgeschwächter Intensität übertragen werden.

Dadurch wird erreicht, dass mehr als zwei erfindungsgemäße Kommunikationsendgeräte miteinander in einer Konferenzschaltung geschaltet und im selben Raum sein können, ohne dass Rückkopplungsschleifen entstehen.

In einer weiteren besonders vorteilhaften Ausführungsform der Erfindung ist darüber hinaus zumindest der weitere Verfahrensschritt vorgesehen: Anbinden der an der Konferenzschaltung beteiligten Kommunikationsendgeräte an eine externe Gegenstelle über die Konferenzeinrichtung.

Anbinden bedeutet dabei, dass zumindest ein externe Gegenstelle, beispielsweise ein Festnetztelefon, ein Mobiltelefon oder andere bekannte Kommunikationsendgeräte, über die Konferenzeinrichtung mit den internen Kommunikationsendgeräten in der Konferenzschaltung verbunden sein kann.

Dies hat den Vorteil, dass auch nichterfindungsgemäße Kommunikationsendgeräte mit den erfindungsgemäßen Kommunikationsendgeräten über die Konferenzeinrichtung in einer Konferenzschaltung verbunden sein können.

Die erfindungsgemäßen Kommunikationsendgeräte können auch an eine Konferenzeinrichtung angebunden sein, die Entkopplungs- und Kopplungssignalisierungen der erfindungsgemäßen Kommunikationsendgeräte nicht unterstützt (Abwärtskompatibilität). Dabei gehen jedoch die erfindungsgemäßen Vorteile der Konferenzschaltung verloren, es sei denn, die Erkennung wird wie weiter oben erläutert, durch die Konferenzeinrichtung selbst durchgeführt.

Der unabhängige Anspruch 5 stellt ein Kommunikationsendgerät zur mobilen Sprachund/oder Datenkommunikation in einem funkbasierten Netzwerk zur Verfügung, wobei das Kommunikationsendgerät zumindest einen Freisprechmodus, einen Konferenzmodus und einen kombinierten Modus aufweist. In dem kombinierten Modus wird das Kommunikationsendgerät zeitgleich sowohl im Freisprechmodus als auch im Konferenzmodus betrieben. Das Kommunikationsendgerät sendet bei Betrieb im kombinierten Modus ein erstes Erkennungssignal. Weiter ist das Kommunikationsendgerät dazu eingerichtet, ein zweites Erkennungssignal zu empfangen. Das erste Erkennungssignal und das zweite Erkennungssignal sind jeweils ein für das menschliche Gehör nicht wahrnehmbarer akustischer Ton. Das Kommunikationsendgerät ist weiter dazu eingerichtet, mit einer Konferenzeinrichtung zu kommunizieren, und das Kommunikationsendgerät ist darüber hinaus dazu eingerichtet, zumindest ein Entkopplungssignal und ein Kopplungssignal an die Konferenzeinrichtung zu senden.

Damit wird für das oben beschriebene Verfahren ein erfindungsgemäßes Kommunikationsendgerät zur Verfügung gestellt.

In einer besonders vorteilhaften Ausführungsform der Erfindung ist darüber hinaus vorgesehen, dass der Signalpegel des ersten Erkennungssignals abhängig ist vom Wiedergabepegel des Kommunikationsendgerätes.

D.h., dass der Erkennungssignalpegel angepasst ist, an den Wiedergabepegel des Kommunikationsendgerätes und somit in seiner Signalstärke dynamisch begrenzt werden kann. Ist der Wiedergabepegel geringer, kann der mögliche Abstand zwischen zwei sich in räumlicher Nähe befindenden Kommunikationsendgeräten größer werden, für den keine Rückkopplungsschleife zwischen diesen beiden Kommunikationsendgeräten auftritt.

Damit wird erreicht, dass zwei sich in räumlicher Nähe befindliche Kommunikationsendgeräte während einer Konferenzschaltung vorzugsweise nur dann voneinander entkoppelt werden, wenn sich andernfalls eine Rückkopplungsschleife ergäbe.

In einer weiteren besonders vorteilhaften Ausführungsform der Erfindung ist darüber hinaus vorgesehen, dass das erste Erkennungssignal codierte Informationen enthält, wobei die codierten Informationen des ersten Erkennungssignales zumindest Basisinformationen zur eindeutigen Identifizierung des, das erste Erkennungssignal sendenden, Kommunikationsendgerätes enthalten.

Damit wird erreicht, dass das Kommunikationsgerät mit seinem Erkennungssignal auch eine Kennung senden kann, mit der das Kommunikationsendgerät von anderen Kommunikationsendgeräten, die das Erkennungssignal empfangen können, identifiziert werden kann.

Der unabhängige Anspruch 7 stellt ein Kommunikationssystem zur mobilen Sprach- und/oder Datenkommunikation in einem funkbasierten Netzwerk zur Verfügung, umfassend: Zumindest ein erstes Kommunikationsendgerät und ein zweites Kommunikationsendgerät und eine Konferenzeinrichtung, die dazu eingerichtet ist, die zumindest zwei Kommunikationsendgeräte in einer Konferenzschaltung miteinander zu koppeln, so dass die miteinander verbundenen Kommunikationsendgeräte zeitgleich miteinander kommunizieren können. Die Kommunikationsendgeräte sind dabei dazu eingerichtet, jeweils Erkennungssignale zu senden, wobei die Erkennungssignale für das menschliche Gehör nicht wahrnehmbare akustische Töne sind. Die Kommunikationsendgeräte sind darüber hinaus dazu eingerichtet, die Erkennungssignale der jeweils anderen Kommunikationsendgeräte zu empfangen. Die Kommunikationsendgeräte sind weiter dazu eingerichtet, jeweils eine Entkopplungssignalisierung an die Konferenzeinrichtung zu senden, wobei die Konferenzeinrichtung darüber hinaus dazu eingerichtet ist, die Entkopplungssignalisierungen zu empfangen. Die Konferenzeinrichtung ist weiter dazu eingerichtet, dasjenige Kommunikationsendgerät, welches die Entkopplungssignalisierung gesendet hat, von zumindest einem weiteren Kommunikationsendgerät zu entkoppeln.

Damit wird für das oben beschriebene Verfahren ein erfindungsgemäßes Kommunikationssystem zur Verfügung gestellt.

In einer besonders vorteilhaften Ausführungsform der Erfindung ist darüber hinaus vorgesehen, dass die Signalpegel der gesendeten Erkennungssignale abhängig sind von den jeweiligen Wiedergabepegeln der das jeweilige Erkennungssignal sendenden Kommunikationsendgeräte.

Damit wird in dem Kommunikationssystem erreicht, dass zwei sich in räumlicher Nähe befindliche Kommunikationsendgeräte während einer Konferenzschaltung vorzugsweise nur dann voneinander entkoppelt werden, wenn sich andernfalls eine Rückkopplungsschleife ergäbe.

In einer weiteren besonders vorteilhaften Ausführungsform der Erfindung ist darüber hinaus vorgesehen, dass das die gesendeten Erkennungssignale codierte Informationen enthalten, wobei die codierten Informationen der gesendeten Erkennungssignale zumindest Basisinformationen zur eindeutigen Identifizierung der, das entsprechende Erkennungssignal sendenden, Kommunikationsendgeräte enthalten.

Damit wird in dem Kommunikationssystem erreicht, dass das Kommunikationsgerät mit seinem Erkennungssignal auch eine Kennung senden kann, mit der das Kommunikationsendgerät von anderen Kommunikationsendgeräten, die das Erkennungssignal empfangen können, identifiziert werden kann.

Diese Beispiele sind nicht abschließend zu sehen.

Das erfindungsgemäße Verfahren zur akustischen Kopplungserkennung zwischen Kommunikationsendgeräten zur mobilen Sprach- und/oder Datenkommunikation in einem funkbasierten Netzwerk, die zugehörige Vorrichtung und das zugehörige System sind nachfolgend in einem Ausführungsbeispiel beschrieben und zeichnerisch dargestellt, wobei die Figuren zeigen:
Fig. 1 skizzenhaft dargestellt ist beispielhaft der Aufbau einer Konferenzschaltung mit internen und externen Teilnehmern, gemäß einer möglichen Ausführungsform der Erfindung;
Fig. 2 skizzenhaft dargestellt ist der Aufbau eines Kommunikationsendgerätes, fokussiert auf seine Betriebsmodi und den Sendesignalen im kombinierten Modus, gemäß einer möglichen Ausführungsform der Erfindung;
Fig. 3 skizzenhaft dargestellt ist beispielhaft die Kommunikation zwischen einem ersten Kommunikationsendgerät und einer Konferenzeinrichtung im Falle des Erkennens eines benachbarten weiteren Kommunikationsendgerätes durch das erste Kommunikationsendgerät, gemäß einer möglichen Ausführungsform der Erfindung.

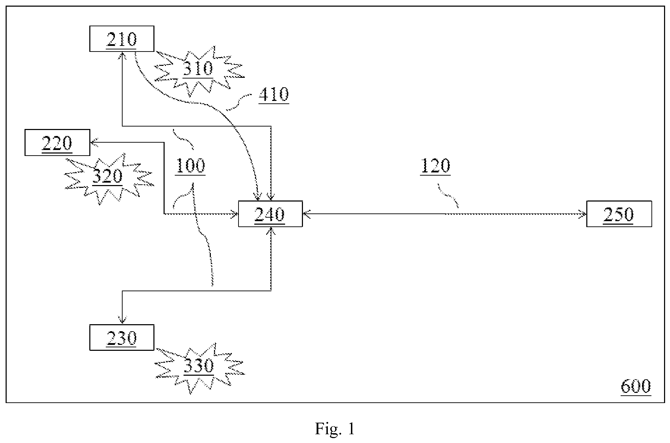

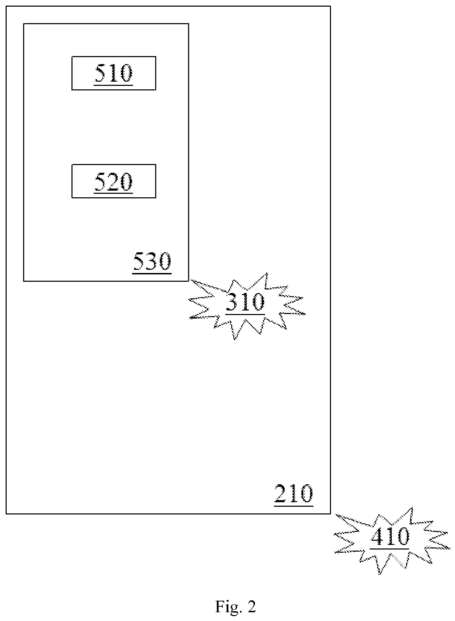

Fig. 1 zeigt beispielhaft den Aufbau einer Konferenzschaltung 600 mit internen und externen Teilnehmern 210, 220, 230, 250, gemäß einer möglichen Ausführungsform der Erfindung. In Fig. 1 sind an einer Konferenzschaltung 600 beispielhaft vier Konferenzteilnehmer 210, 220, 230, 250 beteiligt. Die Konferenzschaltung 600 wird dabei über eine Konferenzeinrichtung 240 realisiert. Bei den vier Konferenzteilnehmern 210, 220, 230, 250 handelt es sich um drei interne, miteinander gekoppelte 100 Kommunikationsendgeräte 210, 220, 230 gemäß einer erfindungsgemäßen möglichen Ausführungsform und um einen extern angebundenen 120 Konferenzpartner an einer externen Gegenstelle 250.
Da die Kommunikationsendgeräte 210, 220, 230 sich in einer Konferenzschaltung 600 befinden, werden sie währenddessen im Konferenzmodus 520 betrieben. Im Beispiel der Fig. 1 werden die Kommunikationsendgeräte 210, 220, 230 zusätzlich auch noch jeweils im Freisprechmodus 510 betrieben. Diese kombinierte Betriebsart entspricht dann dem kombinierten Modus 530, wie aus Fig. 2 ersichtlich wird.
Während ein Kommunikationsendgerät 210, 220, 230 gemäß einer Ausführungsform der Erfindung im kombinierten Modus betrieben wird, sendet es ein Erkennungssignal 310, 320, 330, mit dem es von anderen internen Konferenzteilnehmern 210, 220, 230 identifiziert werden kann, wenn diese Konferenzteilnehmer 210, 220, 230 einen kritischen Abstand unterschreiten.

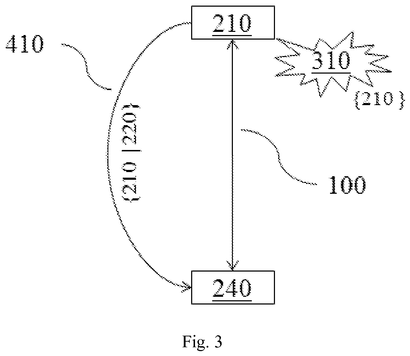

Im Beispiel der Fig. 1 befinden sich ein erstes Kommunikationsendgerät 210 und ein zweites Kommunikationsendgerät 220 derart nah beieinander, dass das erste Kommunikationsendgerät 210 das Erkennungssignal 320 des benachbarten zweiten Kommunikationsendgerätes 220 bereits empfangen hat; und somit sendet das erste Kommunikationsendgerät 210 eine Entkopplungssignalisierung 410 an die Konferenzeinrichtung 240. In der Entkopplungssignalisierung 410 sind, wie aus Fig. 3 ersichtlich Informationen enthalten, mit denen die Konferenzeinrichtung 240 entscheiden kann, welche Kommunikationsendgeräte 210, 220, 230 voneinander entkoppelt 110 werden sollen, ohne diese jedoch aus der Konferenzschaltung 600 zu lösen. In Fig. 1 wird die Konferenzeinrichtung 240 aufgrund der empfangenen Entkopplungssignalisierung 410 entscheiden, das erste Kommunikationsendgerät 210 und das zweite Kommunikationsendgerät 220 voneinander zu entkoppeln 110.

Fig. 2 zeigt den Aufbau eines Kommunikationsendgerätes 210 gemäß einer möglichen Ausführungsform der Erfindung, fokussiert auf seine Betriebsmodi und den Sendesignalen im kombinierten Modus. Das Kommunikationsendgerät 210 umfasst dabei einen Freisprechmodus 510 und einen Konferenzmodus 520. Im Freisprechmodus 510 ist ein Lautsprecher zur Wiedergabe des empfangenen Sprachsignals aktiviert und ein Mikrofon zum Empfang von akustischen Signalen aus der näheren Umgebung (Lautsprecher und Mikrofon in der Fig. 2 nicht dargestellt). Im Konferenzmodus 520 ist das Kommunikationsendgerät 210 bereit, in eine Konferenzschaltung 600 - beispielsweise aus Fig. 1 - eingebunden zu werden.

Fig. 3 zeigt beispielhaft die Kommunikation zwischen einem ersten Kommunikationsendgerät 210 und einer Konferenzeinrichtung 240 im Falle des Erkennens eines benachbarten weiteren Kommunikationsendgerätes 220 (hier nicht dargestellt) durch das erste Kommunikationsendgerät 210, gemäß einer möglichen Ausführungsform der Erfindung.
In Fig. 3 ist das Kommunikationsendgerät 210 über die Konferenzeinrichtung 240 in eine Konferenzschaltung 600 - beispielsweise aus Fig. 1 - geschaltet und an zumindest ein weiteres Kommunikationsendgerät 220 gekoppelt 100. Im Beispiel der Fig. 3 sendet das Kommunikationsendgerät 210 ein Erkennungssignal 310, welches zumindest seine Identifikationsdaten ({210}) enthält. Weiter sendet das Kommunikationsendgerät auch eine Entkopplungssignalisierung 410 an die Konferenzeinrichtung 240, bei der die Entkopplungssignalisierung 410 Informationen enthält, welche Kommunikationsendgeräte 210, 220 voneinander entkoppelt werden sollen ({210 | 220}).

## Patentansprüche

1. Verfahren zur Beseitigung akustischer Rückkopplung in einer Konferenzschaltung zwischen Kommunikationsendgeräten zur mobilen Sprach- und/oder Datenkommunikation in einem funkbasierten Netzwerk, umfassend zumindest die Verfahrensschritte:
- koppeln (100) zumindest eines ersten Kommunikationsendgerätes (210) mit einem zweiten Kommunikationsendgerät (220) in einer Konferenzschaltung (600) mittels einer Konferenzeinrichtung (240),
- senden eines ersten akustischen Erkennungssignales (310) durch das erste Kommunikationsendgerät (210), wobei der Signalpegel des ersten akustischen Erkennungssignals (310) abhängig ist vom Wiedergabepegel des Kommunikationsendgerätes (210),
- senden eines zweiten akustischen Erkennungssignales (320) durch das zweite Kommunikationsendgerät (220),
- senden einer Entkopplungssignalisierung (410) durch das erste Kommunikationsendgerät (210) für den Fall, dass das erste Kommunikationsendgerät (210) das zweite akustische Erkennungssignal (320) des zweiten Kommunikationsendgerätes (220) empfängt,
- empfangen der Entkopplungssignalisierung (410) durch die Konferenzeinrichtung (240),
- ermitteln welche Kommunikationsendgeräte (210, 220) voneinander entkoppelt werden sollen, basierend auf der durch die Konferenzeinrichtung (240) empfangenen Entkopplungssignalisierung (410), und
- entkoppeln (110) der ermittelten, zu entkoppelnden Kommunikationsendgeräte (210, 220) voneinander, so dass die Konferenzeinrichtung (240) die von dem Kommunikationsendgerät empfangenen Signale nicht oder nur in erheblich abgeschwächter Intensität an die jeweils entkoppelten Kommunikationsendgeräte (210, 220) überträgt.

2. Verfahren nach Anspruch 1, darüber hinaus umfassend die Verfahrensschritte:
- senden einer Kopplungssignalisierung (710) durch das erste Kommunikationsendgerät (210) für den Fall, dass das erste Kommunikationsendgerät (210) das zweite akustische Erkennungssignal (320) des zweiten Kommunikationsgerätes (220) nicht mehr empfängt,
- empfangen der Kopplungssignalisierung (710) durch die Konferenzeinrichtung (240), und
- erneutes koppeln (100) des ersten Kommunikationsendgerätes (210) mit dem zweiten Kommunikationsendgerät (220).

3. Verfahren nach Anspruch 1 oder 2, darüber hinaus umfassend die Verfahrensschritte:
- koppeln (100) zumindest eines dritten Kommunikationsendgerätes (230) mit dem ersten Kommunikationsendgerät (210) und dem zweiten Kommunikationsendgerät (220) in der Konferenzschaltung (600) mittels der Konferenzeinrichtung (240),
- senden eines dritten akustisches Erkennungssignales (330) durch das dritte Kommunikationsendgerät (210),
- senden einer Entkopplungssignalisierung (410) durch das erste Kommunikationsendgerät (210) und/oder zweite Kommunikationsendgerät (220) für den Fall, dass das erste Kommunikationsendgerät (210) und/oder zweite Kommunikationsendgerät (220) das dritte akustische Erkennungssignal (330) des dritten Kommunikationsendgerätes (230) empfangen, und
- wobei das Entkoppeln (110) der ermittelten zu entkoppelnden Kommunikationsendgeräte (210, 220, 230) voneinander erfolgt, ohne dass die ermittelten zu entkoppelnden Kommunikationsendgeräte (210, 220, 230) aus der Konferenzschaltung (300) gelöst werden.

4. Verfahren nach Anspruch 1 bis 3, darüber hinaus umfassend die Verfahrensschritte:
- anbinden (120) der an der Konferenzschaltung (600) beteiligten Kommunikationsendgeräte (210, 220, 230) an eine externe Gegenstelle (250) über die Konferenzeinrichtung (240).

5. Kommunikationsendgerät (210) zur mobilen Sprach- und/oder Datenkommunikation in einem funkbasierten Netzwerk, wobei
das Kommunikationsendgerät (210) zumindest einen Freisprechmodus (510), einen Konferenzmodus (520) und einen kombinierten Modus (530) aufweist,
wobei in dem kombinierten Modus (530) das Kommunikationsendgerät (210) zeitgleich sowohl im Freisprechmodus (510) als auch im Konferenzmodus (520) betrieben wird, das Kommunikationsendgerät (210) bei Betrieb im kombinierten Modus (530) ein erstes akustisches Erkennungssignal (310) sendet, wobei der Signalpegel des ersten akustischen Erkennungssignals (310) abhängig ist vom Wiedergabepegel des Kommunikationsendgerätes (210),
das Kommunikationsendgerät (210) dazu eingerichtet ist, ein zweites akustisches Erkennungssignal (320) des zweiten Kommunikationsendgeräts (220) zu empfangen,
wobei das erste akustische Erkennungssignal (310) und das zweite akustische Erkennungssignal (320) jeweils ein für das menschliche Gehör nicht wahrnehmbarer akustischer Ton sind,
das Kommunikationsendgerät (210) dazu eingerichtet ist, mit einer Konferenzeinrichtung (240) zu kommunizieren, und
wobei das Kommunikationsendgerät (210) dazu eingerichtet ist, zumindest ein Entkopplungssignal (410) und ein Kopplungssignal (710) an die Konferenzeinrichtung zu senden, wobei das Entkopplungssignal (410) für den Fall gesendet wird, dass das Kommunikationsendgerät (210) das zweite akustische Erkennungssignal (320) des zweiten Kommunikationsendgerätes (220) empfängt und das Entkopplungssignal bewirkt, dass die Konferenzeinrichtung die von einem Kommunikationsgerät empfangenen Signale nicht oder nur in erheblich abgeschwächter Intensität an die jeweils entkoppelten Kommunikationsendgeräte überträgt.

6. Kommunikationsendgerät nach Anspruch 5, **dadurch gekennzeichnet, dass** das erste akustische Erkennungssignal (310) codierte Informationen enthält,
wobei die codierten Informationen des ersten akustischen Erkennungssignales (310) zumindest Basisinformationen zur eindeutigen Identifizierung des, das erste akustische Erkennungssignal (310) sendenden, Kommunikationsendgerätes (210) enthalten.

7. Kommunikationssystem zur mobilen Sprach- und/oder Datenkommunikation in einem funkbasierten Netzwerk, umfassend:
Zumindest ein erstes Kommunikationsendgerät (210) und ein zweites Kommunikationsendgerät (220) und eine Konferenzeinrichtung (240), die dazu eingerichtet ist, die zumindest zwei Kommunikationsendgeräte (210, 220) in einer Konferenzschaltung (600) miteinander zu koppeln (100), so dass die miteinander verbundenen Kommunikationsendgeräte (210, 220) zeitgleich miteinander kommunizieren können,
wobei die Kommunikationsendgeräte (210, 220) dazu eingerichtet sind, jeweils akustische Erkennungssignale (310, 320) zu senden,
wobei die akustischen Erkennungssignale (310, 320) für das menschliche Gehör nicht wahrnehmbare akustische Töne sind,
wobei die Kommunikationsendgeräte (210, 220) darüber hinaus dazu eingerichtet sind, die akustischen Erkennungssignale (310, 320) der jeweils anderen Kommunikationsendgeräte (210, 220) zu empfangen, und
wobei die Kommunikationsendgeräte (210, 220) dazu eingerichtet sind, jeweils eine Entkopplungssignalisierung (410, 420) an die Konferenzeinrichtung (240) zu senden, wobei die Konferenzeinrichtung (240) darüber hinaus dazu eingerichtet ist, die Entkopplungssignalisierungen (410, 420) zu empfangen,
wobei die Konferenzeinrichtung (240) dazu eingerichtet ist, dasjenige Kommunikationsendgerät (210, 220), welches die Entkopplungssignalisierung (410, 420) gesendet hat, von zumindest einem weiteren Kommunikationsendgerät (210, 220) zu entkoppeln (110), so dass die von den Kommunikationsendgeräten empfangenen Signale nicht oder nur in erheblich abgeschwächter Intensität an das entkoppelte Kommunikationsendgerät übertragen werden, und
wobei die Signalpegel der gesendeten akustischen Erkennungssignale (310, 320) abhängig sind von den jeweiligen Wiedergabepegeln der das jeweilige akustische Erkennungssignal (310, 320) sendenden Kommunikationsendgeräte (210, 220).

8. Kommunikationssystem nach Anspruch 7, **dadurch gekennzeichnet, dass** das die gesendeten akustischen Erkennungssignale (310, 320) codierte Informationen enthalten,
wobei die codierten Informationen der gesendeten akustischen Erkennungssignale (310, 320) zumindest Basisinformationen zur eindeutigen Identifizierung der, das entsprechende akustische Erkennungssignal (310, 320) sendenden, Kommunikationsendgeräte (210, 220) enthalten.

9. Kommunikationssystem nach einem der Ansprüche 5 bis 8, **dadurch gekennzeichnet, dass** das akustische Erkennungssignal (310, 320) ein hochfrequentes Signal ist.

10. Kommunikationssystem nach einem der Ansprüche 5 bis 8, **dadurch gekennzeichnet, dass** die Signalintensität des akustischen Erkennungssignal (310, 320) unterhalb der Wahrnehmungsgrenze des menschlichen Gehörs liegt.

## Claims

1. Method for eliminating acoustic feedback in a conference circuit between communication terminals for mobile voice and/or data communication in a radio based network, including at least the following steps:
- coupling (100) at least a first communication terminal (210) to a second communication terminal (220) in a conference circuit (600) by means of a conference device (240);
- transmitting a first acoustic identification signal (310) by the first communication terminal (210), wherein the signal level of the first acoustic identification signal (310) depends on the playback level of the first communication terminal (210);
- transmitting a second acoustic identification signal (320) by the second communication terminal (220);
- transmitting a decoupling signalling (410) by the first communication terminal (210) in the case that the first communication terminal (210) receives the acoustic identification signal (320) of the second communication terminal (320);
- receiving the decoupling signalling (410) by the conference device (240);
- determining which communication terminals (210, 220) should be decoupled from each other based on the decoupling signalling received by the conference device (240); and
- decoupling (110) the determined communication terminals (210, 220) to be decoupled from each other such that the conference device (240) does not transmit the signals received from the communication terminal or transmits the signals received from the communication terminal only with a substantially reduced intensity to the respective decoupled communication terminals (210, 220).

2. Method according to claim 1, further including the steps:
- transmitting a coupling signalling (710) by the first communication terminal (210) in the case that the first communication terminal (210) does no longer receive the second acoustic identification signal (320) of the second communication terminal (220);
- receiving the coupling signalling (710) by the conference device (240); and
- coupling (100) again the first communication terminal (210) to the second communication terminal (220).

3. Method according to claim 1 or 2, further comprising the steps:
- coupling (100) at least a third communication terminal (230) to the first communication terminal (210) and the second communication terminal (220) in the conference circuit (600) by means of the conference device (240);
- transmitting a third acoustic identification signal (330) by the third communication terminal (210),
- transmitting a decoupling signalling (410) by the first communication terminal (210) and/or the second communication terminal (220) in the case that the first communication terminal (210) and/or the second communication terminal (220) receive the third acoustic identification signal (330) of the third communication terminal (230),
- wherein the decoupling (110) of the determined communication terminals (210, 220, 230) to be decoupled takes place without releasing the determined communication terminals (210, 220, 230) to be decoupled from the conference circuit (300).

4. Method according to any one of claims 1 to 3, further comprising the step:
- connecting (120) the communication terminals (210, 220, 230) participating in the conference circuit (600) to an external counterpart station (250) via the conference device (240).

5. Communication terminal (210) for mobile voice and/or data communication in a radio based network, wherein
the communication terminal (210) includes at least a hands-free mode (510), a conference mode (520) and a combined mode (530),
wherein in the combined mode (530) the communication terminal (210) is simultaneously operated both in the hands-free mode (510) and in the conference mode (520),
the communication terminal (210) when operating in the combined mode (530) transmits a first acoustic identification signal (310), wherein the signal level of the first acoustic identification signal (310) depends on the playback level of the communication terminal (210),
the communication terminal (210) is adapted to receive a second acoustic identification signal (320) of the second communication terminal (220),
wherein the first acoustic identification signal (310) and the second acoustic identification signal (320) each are an audible sound not perceptible for the human sense of hearing,
the communication terminal (210) is adapted to communicate with a conference device (240), and
wherein the communication terminal (210) is adapted to transmit at least a decoupling signal (410) and a coupling signal (710) to the conference device, wherein the decoupling signal (410) is transmitted in the case that the communication terminal (210) receives the second acoustic identification signal (320) of the second communication terminal (220) and the decoupling signal has the effect that the conference device does not transmit the signals received from a communication terminal or only transmits the signals received from a communication terminal with a substantially reduced intensity to the respective decoupled communication terminals.

6. Communication terminal according to claim 5, **characterized in that** the first acoustic identification signal (310) includes encoded information, wherein the encoded information of the first acoustic identification signal (310) includes at least basic information for uniquely identifying the communication terminal (210) which transmits the first acoustic identification signal (310).

7. Communication system for mobile voice and/or data communication in a radio-based network, comprising:
at least a first communication terminal (210) and a second communication terminal (220) and a conference device (240) adapted to couple (100) the at least two communication terminals (210, 220) in a conference circuit (600) such that the interconnected communication terminals (210, 220) are enabled to simultaneously communicate with each other,
wherein the communication terminals (210, 220) are adapted to transmit respective acoustic identification signals (310, 320),
wherein the acoustic identification signals (310, 320) are acoustic sounds which are not perceptible for the human sense of hearing,
wherein the communication terminals (210, 220) are further adapted to receive the acoustic identification signals (310, 320) of the respective other communication terminals (210, 220), and
wherein the communication terminals (210, 220) are adapted to respectively transmit a decoupling signalling (410, 420) to the conference device (240), wherein said conference device (240) is further adapted to receive the decoupling signallings (410, 420),
wherein said conference device (240) is adapted to decouple (110) that communication terminal (210, 220) which has transmitted the decoupling signalling (410, 420) from the at least one other communication terminal (210, 220) such that the signals received from the communication terminals are not transmitted or are only transmitted with a substantially reduced intensity to the decoupled communication terminal, and
wherein the signal level of the transmitted acoustic identification signals (310, 320) depends on the respective playback levels of the communication terminals (210, 220) which transmit the respective acoustic identification signal (310, 320).

8. Communication system according to claim 7, **characterized in that** the transmitted acoustic identification signals (310, 320) include encoded in-formation,
wherein the encoded information of the transmitted acoustic identification signals (310, 320) includes at least basic information for uniquely identifying the communication terminals (210, 220) which transmit the corresponding acoustic identification signal (310, 320).

9. Communication system according to any one of claims 5 to 8, **characterized in that** the acoustic identification signal (310, 320) is a high frequency signal.

10. Communication system according to any one of claims 5 to 8, **characterized in that** the signal intensity of the acoustic identification signal (310, 320) is below the perception threshold of the human sense of hearing.

## Revendications

1. Procédé d'élimination de la réaction acoustique dans une conférence téléphonique entre des appareils émetteurs de communications vers des communications orale et/ou de données mobiles dans un réseau par radio, comprenant au moins les étapes de procédé :
- couplage (100) d'au moins un premier appareil émetteur de communication (210) avec un deuxième appareil émetteur de communications (220) dans une conférence téléphonique (600) au moyen d'un dispositif de conférence (240),
- envoi d'un premier signal de reconnaissance acoustique (310) par le premier appareil émetteur de communications (210), où le niveau de signal du premier signal de reconnaissance acoustique (310) est dépendant du niveau de reproduction de l'appareil émetteur de communications (210),
- envoi d'un deuxième signal de reconnaissance acoustique (320) par le deuxième appareil émetteur de communications (220),
- envoi d'une signalisation de découplage (410) par le premier appareil émetteur de communications (210) dans le cas où le premier appareil émetteur de communications (210) reçoit le deuxième signal de reconnaissance acoustique (320) du deuxième appareil émetteur de communications (220),
- réception de la signalisation de découplage (410) par le dispositif de conférence (240),
- détermination des appareils émetteurs de communications (210, 220) qui doivent être découplés les uns des autres, en se basant sur la signalisation de découplage (410) reçue par le dispositif de conférence (240), et
- découplage (110) des appareils émetteurs de communications (210, 220) déterminés devant être découplés les uns des autres, de sorte que le dispositif de conférence (240) ne transmet pas les signaux reçus par l'appareil émetteur de communications ou les transmet uniquement avec une intensité considérablement atténuée vers les appareils émetteurs de communications (210, 220) respectivement découplés.

2. Procédé selon la revendication 1, comprenant en outre les étapes de procédé :
- envoi d'une signalisation de couplage (710) par le premier appareil émetteur de communications (210) dans le cas où le premier appareil émetteur de communications (210) ne reçoit plus le deuxième signal de reconnaissance acoustique (320) du deuxième appareil de communications (220),
- réception de la signalisation de couplage (710) par le dispositif de conférence (240), et
- nouveau couplage (100) du premier appareil émetteur de communications (210) avec le deuxième appareil émetteur de communications (220).

3. Procédé selon la revendication 1, ou 2, comprenant en outre les étapes de procédé :
- couplage (100) d'au moins un troisième appareil émetteur de communications (230) avec le premier appareil émetteur de communications (210) et le deuxième appareil émetteur de communications (220) dans la conférence téléphonique (600) au moyen du dispositif de conférence (240),
- envoi d'un troisième signal de reconnaissance acoustique (330) par le troisième appareil émetteur de communications (210),
- envoi d'une signalisation de découplage (410) par le premier appareil émetteur de communications (210) et/ou le deuxième appareil émetteur de communications (220) pour le cas où le premier appareil émetteur de communications (210) et/ou le deuxième appareil émetteur de communications (220) reçoivent le troisième signal de reconnaissance acoustique (330) du troisième appareil émetteur de communications (230), et
- où le découplage (110) des appareils émetteurs de communications (210, 220, 230) déterminés pour être découplés les uns des autres a lieu sans que les appareils émetteurs de communications (210, 220, 230) déterminés pour être découplés ne soient détachés de la conférence téléphonique (300).

4. Procédé selon les revendications 1 à 3, comprenant en outre les étapes de procédé :
- rattachement (120) des appareils émetteurs de communications (210, 220, 230) prenant part à la conférence téléphonique (600) à une station distante (250) externe par l'intermédiaire du dispositif de conférence (240).

5. Appareil émetteur de communications (210) pour la communication orale mobile et/ou de données dans un réseau par radio, où
l'appareil émetteur de communications (210) présente au moins un mode mains libres (510), un mode conférence (520) et un mode combiné (530),
où, dans le mode combiné (530), l'appareil émetteur de communications (210) est mis en oeuvre simultanément à la fois dans le mode mains libres (510) et le mode conférence (520),
l'appareil émetteur de communications (210) émet un premier signal de reconnaissance acoustique (310) lors du fonctionnement en mode combiné (530), où le niveau de signal du premier signal de reconnaissance acoustique (310) est dépendant du niveau de reproduction de l'appareil émetteur de communications (210),
l'appareil émetteur de communications (210) est conçu pour recevoir un deuxième signal de reconnaissance acoustique (320) du deuxième appareil émetteur de communications (220),
où le premier signal de reconnaissance acoustique (310) et le deuxième signal de reconnaissance acoustique (320) sont respectivement des sons acoustiques non perceptibles pour l'audition humaine,
l'appareil émetteur de communications (210) est conçu pour communiquer avec une dispositif de conférence (240), et
où l'appareil émetteur de communications (210) est conçu pour envoyer au moins un signal de découplage (410) et un signal de couplage (710) au dispositif de conférence, où le signal de découplage (410) est envoyé pour le cas où l'appareil émetteur de communications (210) réceptionne le deuxième signal de reconnaissance acoustique (320) du deuxième appareil émetteur de communications (220) et active le signal de découplage de sorte que le dispositif de conférence ne transmet pas, ou transmet uniquement avec une intensité considérablement atténuée, les signaux réceptionnés par un appareil émetteur de communications vers les appareils émetteurs de communications respectivement découplés.

6. Appareil émetteur de communications selon la revendication 5, **caractérisé en ce que** le premier signal de reconnaissance acoustique (310) contient des informations codées, où les informations codées du premier signal de reconnaissance acoustique (310) contiennent au moins des informations de base concernant une identification claire de l'appareil émetteur de communications (210) envoyant le premier signal de reconnaissance acoustique (310).

7. Système de communication pour la communication orale mobile et/ou de données dans un réseau par radio, comprenant :
au moins un premier appareil émetteur de communications (210) et un deuxième appareil émetteur de communications (220) et un dispositif de conférence (240) qui est conçu pour coupler les au moins deux appareils émetteurs de communications (210, 220) entre eux dans une conférence téléphonique (600), de sorte que les appareils émetteurs de communications (210, 220) reliés puissent communiquer simultanément entre eux,
où les appareils émetteurs de communications (210, 220) sont conçus pour envoyer chacun des signaux de reconnaissance acoustiques (310, 320),
où les signaux de reconnaissance acoustique (310, 320) ne sont pas des sons acoustiques perceptibles pour l'audition humaine,
où les appareils émetteurs de communications (210, 220) sont en outre conçus pour réceptionner les signaux de reconnaissance acoustique (310, 320) des autres appareils émetteurs de communications (210, 220) respectifs, et
où les appareils émetteurs de communications (210, 220) sont conçus pour envoyer respectivement une signalisation de découplage (410, 420) au dispositif de conférence (240), où le dispositif de conférence (240) est en outre conçu pour réceptionner la signalisation de découplage (410, 420),
où le dispositif de conférence (240) est conçu pour découpler l'appareil émetteur de communications (210, 200) en question qui a envoyé la signalisation de découplage (410, 420) de l'au moins un autre appareil émetteur de communications (210, 220), de sorte que les signaux réceptionnés par les appareils émetteurs de communications ne sont pas transmis, ou transmis uniquement avec une intensité considérablement atténuée, à l'appareil émetteur de communications découplé,
et
où les niveaux de signal des signaux de reconnaissance acoustiques (310, 320) envoyés sont dépendant des niveaux de reproduction respectifs des appareils émetteurs de communications (210, 220) envoyant le signal de reconnaissance acoustique (310, 320) respectif.

8. Système de communication selon la revendication 7, **caractérisé en ce que** les signaux de reconnaissance acoustique (310, 320) envoyés contiennent des informations codées,
où les informations codées des signaux de reconnaissance acoustique (310, 320) envoyés contiennent au moins des informations de base sur l'identification claire des appareils émetteurs de communications (210, 220) envoyant le signal de reconnaissance acoustique (310, 320) correspondant.

9. Système de communication selon l'une des revendications 5 à 8, **caractérisé en ce que** le signal de reconnaissance acoustique (310, 320) est un signal de haute fréquence.

10. Système de communication selon l'une des revendications 5 à 8, **caractérisé en ce que** l'intensité de signal du signal de reconnaissance acoustique (310, 320) se situe en dessous de la limite de perception de l'audition humaine.
